# EUROPEAN PATENT SPECIFICATION

(11) **EP 2 776 497 B1**
(45) Date of publication and mention of the grant of the patent: **25.10.2017**
(21) Application number: 12783215.2
(22) Date of filing: 07.11.2012
(51) Int. Cl.: C08K 3/00, C08K 3/22, C08K 5/132, C08L 23/08

(54) **UV CURABLE FLAME RETARDANT COMPOUNDS, A UV CURING METHOD THEREOF, AND THE USE THEREOF**
UV VERNETZBARE FLAMMHEMMENDE MISCHUNGEN, UV VERNETZUNGSVERFAHREN UND VERWENDUNG
COMPOSÉS RETARDATEURS DE FLAMME DURCISSABLE AUX UV, PROCÉDÉ DE DURCISSEMENT UV, ET UTILISATION

(30) Priority: 07.11.2011 WO PCT/CN2011/081885
(43) Date of publication of application: 17.09.2014
(73) Proprietor: ARLANXEO Deutschland GmbH, 41540 Dormagen (DE)
(72) Inventor: ROOS, Andreas, 40547 Düsseldorf (DE); HERRMANN, Michael, 50829 Köln (DE); KALKOFEN, Rainer, 51379 Leverkusen (DE); HOCH, Martin, Shanghai Jiangsu 201203 (CN); HAN, Tao, Shanghai Jiangsu 201203 (CN); FROMMONT, Hans-Jürgen, 51373 Leverkusen (DE)
(74) Representative: Wichmann, Birgid
(86) International application number: PCT/EP2012/072059
(87) International publication number: WO 2013/068420

(56) References cited:
- EP-A1- 1 000 981
- WO-A1-01/74936
- WO-A1-2006/026256
- GB-A- 2 174 998
- US-A1- 2001 036 972

## Description

### Technical Field

This invention is related to the area of crosslinked rubber compound with flame retardant properties. The technical application are for uses in cable and wire covering, for rubberized fabrics and sheets and other application were layers of rubbery materials are used.

### Background

Currently, for use of basically rubbery compounds curing steps are crucial parts of the manufacturing. Taking the cable manufacture process as an example for crosslinking with peroxides one needs long tubes heated with steam or nitrogen to achieve a sufficient crosslinking. This equipment represents a high investment and considerable amount of energy is need to for heating to the necessary curing temperatures. It also necessary to exclude air as oxygen interferes with radical initiated curing processes.

A further drawback of the peroxide cure is the limitation of the extrusion temperature to avoid premature cure which limits the extrusion speed and thus the productivity of the cable production.

Crosslinking with peroxides, especially when higher amounts of peroxides are needed should be carried out under pressure which can be generated with steam or with nitrogen. The pressure is needed to avoid bubble formation and porosity in the article.

High curing temperatures are sometimes detrimental if the curable rubber compound is part of a composite comprising fabrics, tapes and other materials which are sensitive to heat. Many thermoplastic components tend to suffer heat deformation during conventional high heat curing processes.

Radiation cure is also possible which typically requires an intermediate storage of the extruded cable on a reel as the radiation facility usually is not at the same location. The manufacturer faces the problem of deformation before the curing can be carried out. It is also desirable to add the curing step directly after the extrusion which - however - this requires the availability of an equipment with not too high costs of investment.

A radiation facility is a complex and serves many purposes and usually cannot be incorporation into a cable manufacturing process.

Silane-grafted polyolefin compounds are also in use which allow moisture cure under ambient conditions after extrusion. The drawback of this technology is that the polymer needs to be modified in a separate step to attach the necessary siloxy-groups on the polymer backbone. Not all polymers are available in a moisture curable form and shelf-life of compounds is limited. In thin-walled application, gel particles from premature crosslinking are often a concern while in thicker cable coatings moisture cure is time-consuming and a process control difficult.

Photo-crosslinking, also called UV-cure, has long been used in coating applications where transparent films or varnishes need to be hardened. In the coating industry mostly liquid or semi-liquid composition containing acrylic monomers are cured with high speed under exposure of light. Non-double bond containing materials can also be cured with UV-cure systems.

The limitations of this technology are that the UV-radiation needs to reach the complete thickness of the extruded material to achieve a sufficiently homogeneous crosslinking.

It has been shown that UV cure also works on polymers which do not contain double bonds such as in Dupont patent (EP 1049752, 1999) for ethylene-acrylic-copolymers, ethylene-vinyl acetate copolymers, ethylene-vinyl acetate-carbon monoxide terpolymers and hydrogenated nitrile rubbers. According to EP 1049752, a photo-sensitizer like Irgacure 1800 is used together with a minimum amount of 2 phr (parts per hundred of polymer) of multi-functional coagents such as trimethylolpropane-triacrylate in non-filled rubber compounds. After UV-cure, very moderate mechanical properties were obtained for soft seal materials. Unfortunately, the examples do not show the used of fillers probably due to the negative impact on transparency. The inventors (page 12 line 13) argue that fillers can be employed up to 15 phr and suggest non-black fillers such as minerals or glass fibers. From that one might conclude that it is impossible to use high amounts of fillers typical in rubber articles with hardness of ShA 70 and above. The use of fillers is highly desirable to ensure a high enough rubber reinforcement and furthermore to achieve at least some degree of flame retardency.

Japanese Kokai Patent Application JP 63-26751517 discloses UV cure of chlorosulfonated polyethylene rubber and polyepichlorohydrin hose that is first passed through a UV irradiation apparatus and then vulcanized at elevated temperature for 30-60 minutes.

In EP 1338623, the UV curing of FKM, CPE, CSM and ECO elastomers is described showing an added benefit if tri-n-butyl-tin-hydride is used. However, the UV-cure times are relatively long and in case of 4 minutes cure time the UV exposure was done on samples under water to avoid overheating and generation HCl gas from decomposition. The example compounds in that patent application are all non-filled.

JP 9100383 provides a photo-crosslinkable acrylic rubber composition with 0.05 to 20 pts.wt. (parts by weight) polyfunctional unsaturated monomer, 0.01 to 10 pts.wt. photo-crosslinking initiator and 10 to 100 pts.wt. amorphous fused silica. Aliphatic amines are also present. While this patent application discloses the use of fillers one has to note that silica in general cannot provide flame retardant properties in a rubber compound. Furthermore, the teaching of JP 9100383 seems to restrict the photo-crosslinking technology to fused silica which is expensive and difficult to use due to very low bulk weight.

Khan et al (Polymer Degradation and Stability, volume 93, issue 6, June 2008, pages 1238-1241) studied the cure of EVA resins (19 wt% VA) and EPDM with laser light by using photo-sensitizers and coagents. They found that Irganox 1010 can be used to suppress chain degradation effects.

Qu et al (Polymer Engineering and Science, 2007, p 1762) studied the photo-crosslinking of EVA resins (14 and 18-wt% VA) and LDPE with photo-sensitizer and coagent and found that heat-elongation set tests could be met.

The application of UV cure in the manufacture of cables has been suggested in EP2068329 A1. The necessary ingredients apart from the resin are photo-initiator, multi-functional coagents and anti-oxidants in a polyethylene resin which did not contain any filler.

In Nexan's Technical Review - October 2004, p 10, efforts to develop a UV cure for cables including filled PVC and PE compounds were reported. However, low extrusion speeds and the influence of pigments, namely the UV-light absorption by pigments gave the problem of insufficient light energy for crosslinking. No further details are provided and it is not known whether any of those problems could be solved.

Recent patent application CN 101434728 discloses compounds based on EPDM (ethylene propylene terpolymer), a UV sensitizer, coagent, antioxidants and inorganic fillers such as silica, calcium carbonate, talcum, magnesium carbonate, aluminium oxide and clays. The degree of cure is not given.

In CN 101486819, EPDM compounds are UV cured in the presence of ATH and MDH with resulting tensile strength values are below 10 MPa while elongation at break above 350%. This is indicative of relative low state of cure.

For cable jacket compounds, it is necessary to have a minimum resistance against oil such as under condition of 1 day 100°C in IRM 902. In many cases the required oil, lubricant, diesel oil resistances are much more demanding such that EPDM as polymer bases cannot provide anymore the necessary swell resistance.

In fact, the performance of cables in vastly varying environments is dictated by the jacket materials used. Thus it is very desirable to apply the advantages of a UV-method on larger number of polymer currently in use for the manufacture of cable jackets, especially, rubber polymers apart from EPDM. The same holds for single layer cables where the cable coating has to combine the function of insulation layer and jacketing.

### Summary of the Invention

Therefore, it was an object of this invention to find a compound which can be cured with UV-light in a short time, which can be made flame retardant with metal hydroxide flame retardants and also provides oil resistance as required cable jacket applications. It is understood that such a compound may also be used in other applications where rubber compounds are used to cover flat parts of limited thickness. Those articles can be rubberized fabrics and sheets such as tarpaulins, roofing sheets, rubber linings, thin extruded profiles, rubber coatings and the like.

In the first aspect, the present invention provides a UV-curable flame retardant composition based on a polar ethylene-copolymer comprising a polar ethylene-copolymer, a photo initiator and a filler, wherein the filler is selected from hydroxides, oxides, carbonates and/or silicates of aluminium, magnesium and calcium, and/or mixture thereof, and optional silica, and the filler is more than 50 parts by weight on the basis of 100 parts by weight the polar ethylene-copolymer. In the second aspect, the present invention provides method for preparing the UV-curable flame retardant composition according to the invention, comprising:
adding a polar ethylene-copolymer, and then gradually adding a filler, optional a plasticizer, optional an anti-oxidant, optional processing aid and lubricant, and optional a coupling agent,
mixing the ethylene-copolymer and the filler, optional a plasticizer, optional an anti-oxidant, optional processing aid and lubricant, and optional a coupling agent,
adding a photo-initiator, and optional a crosslinker coagent, to the resultant mixture,
wherein the filler is selected from hydroxides, oxides, carbonates and/or silicates of aluminium, magnesium and calciums, and/or mixture thereof, and optional silica, and the filler is more than 50 parts by weight on the basis of 100 parts by weight the polar ethylene-copolymer.

In the third aspect, the present invention provides a UV-curing method for a UV-curable flame retardant composition according to the invention, comprising:
adding a polar ethylene-copolymer, and then gradually adding a filler, optional a plasticizer, optional an anti-oxidant, optional an processing aid and lubricant, optional a coupling agent, and optional a crosslinker coagent to the polar ethylene-copolymer,
mixing the ethylene-copolymer and the filler, optional a plasticizer, optional an anti-oxidant, optional processing aid and lubricant, and optional a coupling agent,
adding a photo-initiator, and optional a crosslinker coagent, to the resultant mixture, and
UV-curing by using light sources with wavelength between 200 and 700 nm after the resultant mixture has been shaped into any desired form article and where the UV-curing is carried out at least to an extent that the surface of the article is crosslinked,
wherein the filler is selected from hydroxides, oxides, carbonates and/or silicates of aluminium, magnesium and calcium, and/or mixture thereof, and optional silica, and the filler is more than 50 parts by weight on the basis of 100 parts by weight the polar ethylene-copolymer,

In the fourth aspect, the present invention provides an article produced by the UV-curable flame retardant composition of the invention, or the UV-curable flame retardant composition produced by the UV-curing method of the invention.

In the fifth aspect, the present invention provides a use of the UV-curable flame retardant composition of the invention, or the UV-curable flame retardant composition produced by the UV-curing method of the invention in the manufacture of a cable jacket material, rubberized fabrics and sheets, such as tarpaulins, roofing sheets, rubber linings, thin extruded profiles, rubber coatings and the like.

### Brief Description to the Figures

The above and other aspects, features and advantages of the invention will become apparent from the following detailed description in conjunction with the accompanying drawings, in which the number represents the number of the example hereinafter and:

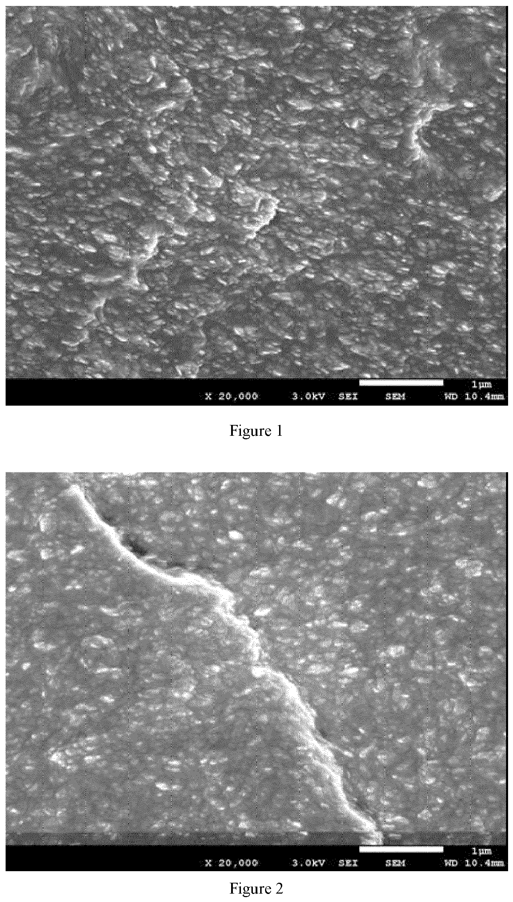

Figure 1 is the scanning electron-microscope (SEM) of the sample of Compound 5 with thickness of 1mm which was UV cured and cryo-fractured;
Figure 2 is the scanning electron-microscope (SEM) of the sample of Compound 3 with thickness of 1mm which was UV cured and cryo-fractured.

### Detailed Description of the Invention

Based on the above mentioned objects of the invention, elastomers of choice are those which have polar groups attached to the main chain to enhance resistance to oily fluids, greases, fuels, lubricants often encountered in practical applications. More specifically, suitable polymers are ethylene copolymers with polar co-monomers incorporated such as ethylene-vinyl acetate copolymers, ethylene-acrylate copolymers and partly or fully hydrogenated butadiene-acrylonitrile copolymers, which may be generally considered as an ethylene-acrylonitrile copolymer. All of those polymers have a proven oil resistance in conventionally cured application and it is well established that the degree of fluid swell resistance depend on the type and amount of polar groups incorporated into the copolymer. A too low content of those polar co-monomers content tends to produce relatively crystalline materials due to the crystallization of ethylene sequences. In this case oil resistance can only be expected if the immersion tests take place at temperatures well below the melting range of the crystalline portion of these polymers.

For the purposes of this application, an embodiment of the invention provides a UV-curable flame retardant composition based on a polar ethylene-copolymer comprising a polar ethylene-copolymer, a photo initiator, and a filler, wherein the filler is selected from hydroxides, oxides, carbonates and/or silicates of aluminium, magnesium and calcium, and/or mixture thereof, and optional silica, and the filler is more than 50 parts by weight on the basis of 100 parts by weight the polar ethylene-copolymer. In a preferable embodiment, the average particle size d₅₀ of the filler is micron-sized or less.

In a more preferable embodiment, the particles size of the filler is 0.7 micron or less, preferably the particles size of the filler is 100 nm or less.

In a further preferable embodiment, the filler is a mixture of both with micron-sized and nano-sized fillers.

In a further still preferable embodiment, the light transparency of the filler at wavelength of 300 nm and above is at least above 50% and the surface area is or more that 2.5 m²/g.

In another preferable embodiment, the polar ethylene-copolymer is selected from ethylene-vinyl acetate copolymers, ethylene methyl acrylate copolymers, ethyl acrylate copolymers, butyl acrylate copolymers, or hydrogenated or partially hydrogenated nitrile butadiene rubber,

In a further preferable embodiment, the composition comprises a plasticizer and/or an anti-oxidant and/or processing aid and lubricant and/or a coupling agentand/or a crosslinker coagent.

In a still preferable embodiment, the filler is selected from the group consisting of aluminium hydroxide, aluminium trihydrate (ATH), magnesium hydroxide (MDH), aluminum oxide hydroxide (boehmite), mixed basic magnesium hydroxide carbonates, magnesium carbonate, calcium carbonate, mixed carbonates such as huntite, talcum, or a mixture of two or more, and optional silica, and wherein the particle size of the filler is around 1/4 of the wave length of UV-light, and/or the surface area of the filler is at least 5 m²/g.

In a further still preferable embodiment, the refractive index difference between the polar ethylene-copolymer and the filler is more than 0.07, preferably more than 0.09.

In a further preferable embodiment, the amount of the polar ethylene-copolymer is of 100 parts by weight, the filler ranges from about 60 to about 200 parts by weight, the photo-initiator ranges from about 0.1 to about 5 parts by weight, the plasticizer ranges from 0 to about 20 parts by weight, the anti-oxidant ranges from 0 to about 2.0 parts by weight, the processing aid and lubricant range from 0 to about 5.0 parts by weight, the coupling agent ranges from 0 to about 5 parts by weight, and the crosslinker coagent ranges from 0 to 20 about parts by weight.

In a more preferable embodiment, the amount of the polar ethylene-copolymer is of 100 parts by weight, the filler ranges from about 80 to about 160 parts by weight, the photo-initiator ranges from about 0.5 to about 3 parts by weight, the plasticizer ranges from 0 to about 15 parts by weight, the anti-oxidant ranges from f about 0.01 to about 1.0 parts by weight, the processing aid and lubricant range from 0 to about 2 parts by weight, the coupling agent ranges from 0-2 parts by weight, and the crosslinker coagent ranges from 0.5 to about 5 parts by weight.

In a preferable embodiment, the photo-initiator is selected from the group consisting of phenones such as benzophenone, hydroxyalkyl benzophenone and their derivatives, acetophenones, amino-acetophenones, diethoxyacetophenones, benzoin derivatives, benzil ketales, acyl-phosphine oxides such as bis(2,4,6-trimethylbenzoyl)-phenylphosphine oxide, bis(2,6-dimethoxybenzoyl)-(2,4,4-trimethylpentyl)phosphine oxide, 2,4,4-trimethylbenzoyl diphenylphosphine oxide, xanthone, thioxanthone, and a mixture of two or more.

In another preferable embodiment, the crosslinker coagent is selected from the group consisting of triallyl-cyanurate, triallyl-isocyanurate, multifunctional acrylates and methacrylates, and a mixture of two or more.

In a more preferable embodiment, the multifunctional acrylates and methacrylates are selected from the group consisting of trimethylolpropane-trimetacrylates and tri-acrylates including those with ethoxy and propxy-groups, ethylene-glycol-diacrylates and dimetacrylates including those with ethoxy, propoxy-groups, polyesters, polyoles, polyurethanes, and alkoxylated polyols such as neopentylglycol, butylethylpropane diol, trimethylolpropane pentaerythritol, dipentaerythritol, polybutadiene-dioles, or glycerol.

In a preferable embodiment, the photo-initiator is selected from benzophenone, acetophenones, amino-acetophenones, diethoxyacetophenones, and a mixture of two or more.

In another preferable embodiment, the processing aid and lubricant are selected from the group consisting of stearic acid, stearamide, stearyl amine, waxes, and a mixture of two or more.

In a further preferable embodiment, the filler is pre-treated by fatty acids, alkoxy-silanes, titanates, zirconates, or a mixture of two or more.

In another preferable embodiment, the amount of the filler is more than 70 parts by weight on the basis of 100 parts by weight the polar ethylene-copolymer, and at least 50% by weight of the filler comprises hydroxides or oxide-hydroxides of aluminium, magnesium, or a mixture thereof.

In a further preferable embodiment, the UV-curable flame retardant composition further comprises an anti-stick agent selected from stearic acid, stearyl-amine or a mixture thereof.

In a more preferable embodiment, the polar ethylene-copolymer is a polar ethylene-copolymer with low melting temperature, especially below 100°C or a polymer which only has a lower amount of crystallinity, preferably below 50% of the reference value for polyethylene, more preferably below 30%.

Another embodiment of the invention provides method for preparing the UV-curable flame retardant composition, comprising:
adding a polar ethylene-copolymer, and then gradually adding a filler, optional a plasticizer, optional an anti-oxidant, optional processing aid and lubricant, and optional a coupling agent,
mixing the ethylene-copolymer and the filler, optional a plasticizer, optional an anti-oxidant, optional processing aid and lubricant, and optional a coupling agent,
adding a photo-initiator, and optional a crosslinker coagent, to the resultant mixture,
wherein the filler is selected from hydroxides, oxides, carbonates and/or silicates of aluminium, magnesium and calciums, and/or mixture thereof, and optional silica, and the filler is more than 50 parts by weight on the basis of 100 parts by weight the polar ethylene-copolymer.

In a third embodiment, the present invention provides a UV-curing method for a UV-curable flame retardant composition, comprising:adding a polar ethylene-copolymer, and then gradually adding a filler, optional a plasticizer, optional an anti-oxidant, optional an processing aid and lubricant, optional a coupling agent, and optional a crosslinker coagent to the polar ethylene-copolymer,
mixing the ethylene-copolymer and the filler, optional a plasticizer, optional an anti-oxidant, optional processing aid and lubricant, and optional a coupling agent,
adding a photo-initiator, and optional a crosslinker coagent, to the resultant mixture, and
UV-curing by using light sources with wavelength between 200 and 700 nm after the resultant mixture has been shaped into any desired form article and where the UV-curing is carried out at least to an extent that the surface of the article is crosslinked,
wherein the filler is selected from hydroxides, oxides, carbonates and/or silicates of aluminium, magnesium and calcium, and/or mixture thereof, and optional silica, and the filler is more than 50 parts by weight on the basis of 100 parts by weight the polar ethylene-copolymer,

In a preferable embodiment, the mixing is carried out in an open mill which is optionally preceded by a first mixing step in an internal mixer and then followed by a compaction step by heating to a temperature above 100°C and where the compaction step is carried out by molding or any other shaping process under pressure or in a course of an extrusion process..

In another preferable embodiment, the UV-curing is immediately carried out after extruding at wavelength 200-700 nm with light intensity 400-2000 mW/cm².

In a further preferable embodiment, the UV-curing is immediately carried out after extruding at wavelength 200-700 nm with light intensity 400-2000 mW/cm² and after the UV-curing, an electron beam curing is further carried out.

In a still preferable embodiment, the amount of the filler is more than 70 parts by weight on the basis of 100 parts by weight the polar ethylene-copolymer, and at least 50% by weight of the filler comprises hydroxides or oxide-hydroxides of aluminium or magnesium, or a mixture thereof.

In a still further preferable embodiment, the UV-curable flame retardant composition further comprises an anti-stick agent selected from stearic acid, stearyl-amine or a mixture thereof.

In the fourth embodiment, the present invention provides an article produced by the UV-curable flame retardant composition of the invention, or the UV-curable flame retardant composition produced by the UV-curing method of the invention.

In a preferable embodiment, the article is selected from the group of cable jacket, rubberized fabrics and sheets, such as tarpaulins, roofing sheets, rubber linings, thin extruded profiles, rubber coatings and the like.

In the fifth embodiment, the present invention provides a use of the UV-curable flame retardant composition of the invention, or the UV-curable flame retardant composition produced by the UV-curing method of the invention in the manufacture of a cable jacket material, rubberized fabrics and sheets, such as tarpaulins, roofing sheets, rubber linings, thin extruded profiles, rubber coatings and the like.

The term "optional" or "optionally" means that the element(s), feature(s), condition(s), and the like may happen, occur or present, or may not happen, occur or present.

In many practical applications and relevant technical specifications, the oil swell is tested at 100°C or up to 150°C with reference oils such as IRM 902 or IRM 903 oil and various fuels such as diesel fuel. Under testing conditions with these elevated temperatures or under high service temperatures the polymer crystallinity is reduced due to partial or even complete melting. Then, only the presence of sufficient amounts of polar groups along the polymer chain can provide the necessary swell resistance against non-polar fluids.

It is also well established that flame resistance of polar polymers generally improves with the amount of polar groups such as ester groups or nitrile groups provided flame retardant filler are also present. For both performance criteria the usage of polymers with polar groups is preferred and advantages over non-polar elastomers such as EPDM or other polyolefins can be expected.

To provide flame retardency one can chose between mineral based fillers and also various organic flame retardants. Mineral based flame retardants are preferred as they are less expensive than organic flame retardants such as those based on phosphorous-nitrogen compounds.

Further additive can be added such as processing aids and lubricants such as stearic acid, stearamide, stearyl amine, waxes. It was found that some additives such as calcium stearate generate milky polymer compound which may negatively affect the efficiency of the UV-cure and should thus be avoided.

Therefore, persons skilled in the art will have to determine in prior trials if a certain intended additive has an effect on the degree of transparency. More particular, if chemicals are used which are pre-mixed with polymers the type of polymer should not have a refractive index much different to the main elastomer used for the compound.

Various anti-oxidants can be used such as amine type anti-oxidants. As a guideline, antioxidants which do not much affect the peroxide cure can also be used for UV-cure according to this invention. Anti-stick agents which work by migration onto the surface of the compound can also be used in small enough amounts. If the UV-cure takes place immediately after an extrusion or after a warm shaping process mostly these anti-stick agents such as stearic acid or stearyl-amine have not been migrated and crystallized on the surface and thus no interference is expected.

Preferred fillers are halogen-free to allow the composition to meet zero-halogen-requirements. Especially suitable are fillers which provide flame suppressing effects by the release of water upon exposure with heat. Amongst those are aluminium hydroxide, aluminium trihydrate (ATH), magnesium hydroxide (MDH), aluminum oxide hydroxide (boehmite), mixed basic magnesium hydroxide carbonates. Flame retardency can also be achieved with magnesium carbonate, calcium carbonate, mixed carbonates such as huntite but to a lesser extent. Talcum can be used as a filler for some reinforcement but with little flame retardant effects.

It is critical to choose fillers which do not have too much UV-light absorption above 300 nm. White fillers are therefore preferred over colored filler, especially iron contents are detrimental to UV transparency thus limiting the choices of clay type minerals to relatively pure ones (see Karickhoof et al, Clays and Clay Minerals, 1973, vol 21 pp 59-70). Titanium dioxide is not suitable as it has high light scattering and also absorptions in the UV-region. Also, zinc-oxide, although very common in cable compounds should not be used due to high UV absorption.

Another aspect is the particle size of the fillers. It is well known that light scattering can render polymer compounds almost non-transparent so that only very thin layers can be cured with UV-cure systems. To reduce light scattering in filler-polymer compounds it is important to choose small particle size fillers. As a guideline, if the particle size is around 1/4 of the wave length of light a high transparency can be achieved. The light scattering intensity depends both on particle size of the dispersed filler and the refractive index difference between polymer and filler. If the refractive index difference is only small then larger particle sizes are still possible with sufficient light transmission. To assess the particle size of a filler preferably the BET surface area can be taken. The BET surface area is usually supplied by the supplier of the filler and does roughly correlate with the particle size. If the BET surface area is between 5 and 20 m²/g the particle size is between about 1.5 microns and 0.7 microns. A BET surface area of 40 m²/g corresponds to a d₅₀ value of 0.35 (AlOOH, Actilox 400 SM, Nabaltec). A BET surface area of 22 m²/g in ATH (Apyral 200 SM) has a d₅₀ value 0.3 micron (Nabaltec brochure). Here, fillers with particle sizes from 0.1 to 1.5 microns will be designated as micron-size fillers. Although compounds with these filler have a white appearance with limited translucency in thin sheets, surprisingly, a UV-cure is possible in thinner layers with polar elastomers, especially ethylene-vinyl acetate copolymers.

If the fillers are used with much higher surface area they will be referred here to as nano-sized fillers. One requirement for nano-fillers is that the particle size should be in the range of 0.1 microns or smaller. Then the particle size will be in the range of 1/4 of the wave length of the light relevant light for the UV cure and with sufficient filler dispersion in the polymer the compound will be transparent even if the refractive index of polymer and filler are very different. In this case not only UV-cure can be carried out through a thicker compound but also the final product can be transparent which is desirable for some applications. Some indications for the relationship between refractive index difference between filler and elastomer and for particle size can be taken from H Schulz et al (Composites: Part A 38 (2007) 2451-2459). For example a refractive index mismatch of +/-0.05 gave a transparency of only 20% compared to 90% in case for a refractive index match with particles sizes of 0.7 micron (refractive index of filler 1.53).

For fumed silica as a filler transparency between 85 and 100% was found for a 55 nm grades. From this one can take the importance of a refractive index match together with a small particle size. However, the fillers needed to achieve flame retardency typically have a high refractive index while the polymers intended for use in cured oil resistant compounds have quite low refractive index. For the both, polymer and flame retardant filler, the choices are limited.

**Table 1 Refractive Index of the Fillers and the Polymer**

| | |
|---|---|
| Silica, amorphous | 1.460 |
| Mg(OH)₂ | 1.5700 |
| Al(OH)₃ | 1.5800 |
| NaAlSi₃O₈, Vulkasil Al type | 1.5300 |
| EVM (ethylene-vinyl acetate copolymer, supplied by Lanxess Deutschland GmbH, amorphous grades) | 1.467 |

From patent US20080163557 one can learn that very large particle sized filler such as ATH allow UV-initiated polymerization of acrylate monomers. When particles sizes reach the several micron (up to 10 microns) the light scattering effect diminishes, thus compounds can become transparent. However, for the target properties of flame retardency and necessary reinforcement of the cured elastomer these large particle size fillers cannot be used. It is well established that for examples larger particle size ATH have less flame retardant properties, see for example Sauerwein et al (Halogen Free and Flame Retardant Elastomeric Cable Compounds with Submicron Sized Fillers, Proceedings of the 57th IWCS).

Thus, it seemed a difficult task to achieve the target of this invention.

It was therefore surprising that the UV-cured envisioned is possible both with micron-sized and nano-sized fillers and also their mixture can be used. The achieved light transmittance will be different and will determine the depth of UV cure and the appearance of the final article.

While crystalline polyethylene such as LDPE has a refractive index as high as 1.5100 amorphous ethylene copolymers are much lower.

Preferred polar elastomers for the purpose of providing oil resistance have little or no crystallinity. The refractive indexes are very different to those of fillers. Therefore it is perceived to be very difficult to achieve any light transmittance if those filler are used in the necessary high amounts.

While in cable applications usually the appearance of the cable jacket or insulation is not of primary concern in other areas such as rubberized fabrics, sheets, rubber coating the level of transparency of translucency will have an impact on the use. For example, rubberized sheets for architectural applications or for train-joints should have a higher light transmittance. Train joints are rubber curtains which connect the train cabins and should allow to let some sunlight pass through for improved illumination. The same can be said for buildings where rubberized sheets with light transmittance allow saving energy. Until know, those materials only have been available with silica as a filler and therefore without particular flame retardency. Modern building standards and regulations for the use of materials in public transportation demand for higher flame retardency, often coupled with the request for halogen-free materials.

The invention intends to provide flame retardant compounds with an adjustable level of transparency. At the same time a curing method is provided which overcomes the drawbacks of conventional curing systems based on peroxides.

Filler treatments are important to improve the dispersion of the filler in the elastomer and they can improve the filler-polymer interaction. There are no special requirements for the filler treatments so that fatty acids, alkoxy-silanes or titanates and zirconates can be used either as a pre-treatment of the filler or as an ingredient in the compounding process or both. If a filler treatment has been found beneficial for compounds to be cured with peroxides than one can also assume that this type of filler treatment is also beneficial in the process described in this invention.

Photo-initiators are chemical compounds which after exposure with visible or UV-light are converted into an excited singlet state which quickly turns into a triple state from which 2 radicals can be created through hemolytic chain scission to start cure or polymerization reactions (see P Gloeckner, Radiation Curing, Vincentz Network GmbH & Co KG, 2008 - Technology & Engineering). This type of UV-cure is based on Norrish type I photo initiators. In Norrish type II reaction a photo-initiator combines with a hydrogen donor to create an exciplex which can decompose into radicals.

Here, it is not particular important which kind of UV-cure system is used as long as the efficiency is high enough so that cure times can be kept short. It is, however, relevant that in filled compounds the filler is adapted to the UV-cure system in the sense that the UV-absorption characteristic of the filler, namely the cut off wavelength, is below the wavelength required to initiate the radical formation by the UV-cure system.

Benzophenone has a peak absorbance between 200 and 280 nm so that a cut-off wavelength from an incorporated filler should be well below 300 nm to allow sufficient UV-cure.

Typical UV-cure systems require light absorption between 200 and 400 nm.

For the choice of a suitable light source one can determine the light spectrum from that source and compare with the UV-spectrum of the UV-cure system intended to be used. It is desirable to choose a light source which generates light with sufficient intensity in the wave length area where the productive light absorption of the UV-cure system located. Further beneficial are LTV-lamp with high power output to make the LTV-cure process fast enough. It is not necessary to provide for a cooling of the inventive compounds as elevated temperatures due to the generated heat from irradiation or light absorption are not detrimental for the final properties of the inventive compound.

Typical UV initiators are phenones such as benzophenone, hydroxyalkyl phenone and their derivatives, acetophenone, amino-acetophenones, diethoxyacetophenone, benzoin derivatives, benzil ketales, acyl-phosphine oxides such as bis(2,4,6-trimethylbenzoyl)-phenylphosphine oxide, bis(2,6-dimethoxybenzoyl)-(2,4,4-trimethylpentyl)phosphine oxide, and 2,4,4-trimethylbenzoyl diphenylphosphine oxide. Also suitable are xanthone, thioxanthone. Criteria for choosing UV-initiators are efficiency, tendency to yellowing / less yellowing, required wave-length for activation, sensitivity against quenching with oxygen. As the main purpose of UV initiators is the generation of radicals the individual mechanisms of a UV cure system to create radicals such as homolytic bond cleavage or intramolecular H-abstraction is not particularly important.

The amount of photo-initiator can be in the range of 0.1 to 5 phr (parts per hundred of polymer), more typically 0.5 to 2.5 phr. The amount has to be adjusted according to the thickness, the power of the light source, the transparency of the compound and the time requirements for the curing process.

Coagents for enhancing the UV-cure are multi-functional compounds which are also used in electron-beam initiated cures such as triallyl-cyanurate, triallyl-isocyanurate, multifunctional acrylates and methacrylates. Trifunctiomal acrylates and methacrylates can comprise trimethylolpropane-trimetacrylates and tri-acrylates including those with ethoxy and propxy-groups, ethylene-glycol-diacrylates and dimetacrylates including those with ethoxy and propoxy-groups. Multi-functional (meth)acrylates can also be based on polyesters, polyoles and polyurethanes. They can also be based on alkoxylated polyols like neopentylglycol, butylethylpropane diol, trimethylolpropane or pentaerythritol, dipentaerythritol, polybutadiene-dioles, glyceroles.

In contrast to UV-curable coating which basically are mixtures of monomers with different functionality and molecular weights, the compositions according to this invention basically comprise polymers without any polymerizable double-bonds. The function of coagents is to enhance the crosslink efficiency of the photo-initiators. While UV-crosslinking is possible without coagents improved crosslinking can be achieved with amounts of coagents as low as 1 phr. Thus typical amounts of coagent can be between 0.5 and 5 phr. For the choice of coagents and the amount of coagent one can use guidelines developed by suppliers such as Sartomer for the purpose of enhancing the peroxide cure.

More specifically, the amount to UV curatives and coagents determines the achieved crosslink density. Wile high crosslink densities give better compression set resistance, better hot set, elongation set and related properties the elongation at break usually is reduced. Thus, the individual formulations have to consider balancing the different properties in a similar way as in rubber compounding technology.

The UV cure can usually be accomplished in one step, however, it is also possible to run an extruded or any continuously prepared articles several time through a UV-cure step to enhance the degree of cure and thickness of the compound reached by light.

As the UV-cure efficiency is increased with higher temperatures it can be advantageous to conduct the UV cure immediately after an extrusion process when the extruded article is still warm thereby exploiting the energy introduced. In this way the UV-cure itself does not require any added heating energy except for the amount of light energy which is being dissipated in the article itself.

As all experience here were carried out under normal atmosphere no further blanketing with nitrogen is needed and thus the process can be realized under normal plant operation conditions.

### Materials used:

### Polymers

Levapren 600: ethylene-vinyl acetate copolymer, 60wt% vinyl acetate content, Mooney viscosity ML 1+4,100°C 27, an amorphous polymer, supplied by Lanxess Deutschland GmbH;
Levapren 500: ethylene-vinyl acetate copolymer, 50wt% vinyl acetate content, Mooney viscosity ML 1+4,100°C 27, supplied by Lanxess Deutschland GmbH, polymer with a degree of crystallinity below the 10% of the ideal value for polyethylene.

### Fillers

Nano-sized magnesium hydroxide (Nano-MDH), Helon 1100, surface area BET >100 m²/g, particle size <95 nm, surface treated, supplied by Shandong Helon Kllon Chemical Co Ltd.; http://kllonchemical.en.made-in-china.com/company-Shandong-Kllon-Chemical-Co-Ltd-.htm l.)
Micron-sized magnesium hydroxide (Micro-MDH): Magnifin H-5 IV, BET surface 5 m²/g, particle size d₅₀ 1.25 - 1.65 microns, surface treated, refractive index 1.56-1.58, supplied by Albemarle;
Zinc-borate, supplied by ZiBo WuWei Industry Ltd..

### Plasticizer

DOS, dioctyl sebacate, TOTM, trioctyl-mellitate, supplied by Hallstar.

### Coupling agent

Silquest A-172, vinyl tris(2-methoxyethoxy)silane, supplied by Momentive Performance Materials

### Aging Protection

Rhenogran PCD-50: polycarbodiimide, 50% on EVA, supplied by Rhein Chemie;
Naugard 445, 4,4'-Bis(alpha, alpha-dimethylbenzyl)diphenylamine, supplied by Chemtura;
Vulkanox HS, TMQ, from Lanxess Deutschland GmbH.

### Crosslinker Coagents

TAIC: triallyl-isocyanurate, supplied by Kettlitz-Chemie GmbH
SR-415: ethoxylated (20 units) trimethylol-propane triacrylate coagents, supplied by Sartomer Company;
Luperox F40, 40%, 1,3 and/or 1,4-Bis(tert-butylperoxyisopropyl)benzene, supplied by Arkema;
Rhenofit TRIM/S, trimethylole-propane trimetacrylate on silica, 70%, supplied by Rhein Chemie.

### Photo-sensitizer

Benzophenone: from local lab chemical supply.

### Others

Stearic acid, from local lab chemical supply;
MgO, Maglite DE, fine MgO from Hallstar.

### Examples

The compounds in the following table (Table 2, amounts in phr) were prepared by 2 step mixing in an open mill with a batch temperature of about 55°C for about 20-30 minutes by first adding the polymer and then gradually adding the filler. In the first step a masterbatch was prepared comprising all ingredients except for the photo-sensitizer.

After the first mixing and waiting for at least 1 day in a second step and (if indicated) coagent was added on the open mill while mixing was done through a tight nip to obtain thin sheets.

These sheets were molded into sheets of indicated thickness at 150 or 160°C for 10 minutes. The purpose was to expose the compound to a higher heat step typical in extrusion. Molded sheets were cured with UV light using a UV-chamber from Honle UVACUBE 2000 with 10 cm distance to lamp, duration of 2 minutes and a power of 2 kW.

**Table 2 The Compositions of the Compounds 1 and 2 and the Results thereof**

| Trial | ***Compound 1*** | | | ***Compound 2*** | |
|---|---|---|---|---|---|
| 1^{st} mixing stage, open mill mixing | | | | | |
| Levapren 600 | 100 | | | 100 | |
| Micro-MDH | 140 | | | 150 | |
| Silquest A-172 | 2 | | | 2 | |
| Naugard 445 | 1 | | | 1 | |
| SR-415 | | | | 15 | |
| Stearic acid | 1 | | | 1 | |
| 2^{nd} mixing stage, open mill mixing | | | | | |
| Benzophenone | 1 | | | 1 | |
| then molding into 0.5 and 2 mm sheets at 150°C for 10 minutes | | | | | |
| Compound Mooney ML 1+4, 100°C | 46.8 | | | 27.1 | |
| | 2 mm sheets | | | | |
| | uncured | | UV-cure | Uncured | UV-cure |
| Compound Mooney ML 1+4, 100°C | 46.8 | | 61.2 | 27.1 | 43.7 |
| Tensile properties | | | | | |
| M10%, MPa | 0.5 | | 0.5 | 0.3 | 0.5 |
| M25%, MPa | 0.7 | | 0.7 | 0.4 | 0.7 |
| M50%, MPa | 0.8 | | 0..9 | 0.4 | 0.9 |
| M100%, MPa | 0.9 | | 1 | 0.4 | 1.2 |
| M300%, MPa | 1.1 | | 1.4 | 0.2 | 1.5 |
| TS at yield, MPa | 1.1 | | 1.7 | 0.4 | 1.5 |
| EB (elongation at break), % | 1446 | | 755 | 1100 | 400 |
| | 0.5 mm sheets | | | | |
| | uncured | UV-cure | | Uncured | UV-cure |
| Compound Mooney ML 1+4,100°C | 46.8 | Too high to measure | | 27.1 | Too high to measure |
| Tensile properties | | | | | |
| M10%, MPa | 0.6 | 0.8 | | 0.3 | 1.1 |
| M25%, MPa | 0.8 | 1.2 | | 0.5 | 1.9 |
| M50%, MPa | 0.9 | 1.7 | | 0.5 | 2.8 |
| M100%, MPa | 1.0 | 2.8 | | 0.5 | 4.1 |
| M300%, MPa | 1.0 | 4.3 | | 0.4 | 5.7 |
| TS at yield, MPa | 1.0 | 4.9 | | 0.5 | 5.5 |
| EB (elongation at break), % | 2105 | 519 | | 3548 | 300 |
| Color, appearance | | yellowish | | | Yellowish |

The compounds 1 and 2 were not transparent and only by using a strong light source some light transmittance was observed with sheets below 1 mm thickness. However, repeated mixing (2^{nd} stage) and heat treatment (by molding) improved the light transmittance.

After exposure to the UV-light the sheets turned to slightly yellow. By comparing the sheets before and after UV-cure it was obvious that the surface of the sheets had turned harder and lost any stickiness while the discoloration stretched about 0.5 mm into the sheets. Therefore we conclude that the UV curing had taken place in a thinner skin layer. The compound Mooney values taken before after cure (several pieced put together) showed an increase when using 2 mm sheets. For the 0.5 mm sheets curing was more efficient so that Mooney values could not be measured anymore and therefore curing had taken place.

The comparison of the tensile curves before and after UV-cure shows a shortening of the EB (elongation at break) for both compounds with 2 mm sheets. For the 0.5 mm sheets one can observe an increased TS (tensile strength) and much shorter elongation. This effect is more pronounced in case of compound 2. That indicates that the use of a coagent is beneficial for the UV cure. One can also conclude that the presence of an anti-oxidants of amine type such as Naugard 445 is not detrimental for the UV cure.

The above prepared compound still does not have fully satisfying properties, namely tensile strength need to be improved. However, such a compound may find usage in extruded cable for further electron beam treatment. The simple UV treatment after extrusion can give a surface cured non sticky cable which can be put on a reel without deformation to conduct the complete cure in an electron beam radiation facility. Therefore, the current problem of insufficient handling strength of extruded cables before electron-beam cure can be solved if a short UV-cure is incorporated as an added step after extrusion before cooling and putting on a reel.

As multi-functional coagents as those used in compound 2 are typical in electron-beam curable cable compounds one can conclude that compound 2 can serve as an example for a dual cure cable compound already.

The trials were continued as shown in Tables 3 and 4 below. The micron-sized MDH was exchanged by a nano-MDH. Instead of Naugard 445 only a hydrolysis protection agent Rhenogran PCD was used.

UV curatives were benzophenone and TAIC as coagent.

**Table 3 The Compositions of the Compounds 3-5 and the Results thereof**

| Trial | ***Compound 3*** | ***Compound 4*** | ***Compound 5*** |
|---|---|---|---|
| 1^{st} mixing stage, open mill mixing | | | |
| Levapren 600 | 100 | 100 | 100 |
| nano-MDH | 80 | 100 | 120 |
| Silquest A-172 | 2 | 2 | 2 |
| DOS | 5 | 5 | 5 |
| Rhenogran PCD-50 | 0.5 | 0.5 | 0.5 |
| Stearic acid | 1.5 | 1.5 | 1.5 |
| 2^{nd} mixing stage, open mill mixing, at about 40°C | | | |
| Benzophenone | 1 | 1 | 1 |
| TAIC | 0.7 | 0.7 | 0.7 |
| then molding into 0.5 mm sheets 160°C for 10 minutes | | | 1 |
| Compound Mooney ML 1+4, 100°C | 63 | 79 | 69 |
| Hardness, ShA | 40 | 56.2 | 63.8 |
| Tensile properties uncured | | | |
| TS, MPa | 0.7 | 1 | 1.2 |
| EB (elongation at break), % | 2580 | 1110 | 1206 |
| Elongation set after break, % | 71.3 | 61.5 | 72.3 |
| Tensile properties UV-cured | | | |
| H, ShA | 66.8 | 75 | 79.7 |
| TS, MPa | 13.3 | 16.0 | 17.5 |
| EB (elongation at break), % | 347 | 317 | 205 |
| Elongation set after break, % | 9.4 | 18.9 | 20.5 |
| Color | No yellowing | No yellowing | No yellowing |

**Table 4 The Results of the Compounds 3-5**

| Trial | ***Compound 3*** | ***Compound 4*** | ***Compound 5*** |
|---|---|---|---|
| *molding into 1 mm sheets 160°C for 10 minutes* | | | 1 |
| Hardness, ShA | 44.3 | 63.1 | 69.7 |
| Tensile properties uncured | | | |
| TS at yield, MPa | 0.68 | 1.01 | 1.29 |
| EB, % | 1960 | 1260 | 1070 |
| Tensile properties UV-cured | | | |
| H, ShA | 55.1 | 66.9 | 75.4 |
| TS, MPa | 7.38 | 8.73 | 6.04 |
| EB (elongation at break), % | 373 | 326 | 320 |
| IRM 902 oil immersion 24h, 100°C | | | |
| dV(%) | 20.7 | 19.1 | 15.3 |
| dM(%) | 14.6 | 12.2 | 9.5 |
| IRM 903 oil immersion 72 h, 100°C | | | |
| dV(%) | 75.2 | 63.2 | 63.2 |
| dM(%) | 51.6 | 41.2 | 39.9 |
| *molding into 2 mm sheets 160°C for 10 minutes* | | | 1 |
| Hardness, ShA | 44.3 | 63.1 | 69.7 |
| *Tensile properties uncured* | | | |
| TS at yield, MPa | 0.65 | 0.96 | 1.24 |
| EB, % | 1749 | 1386 | 862 |
| *Tensile properties UV-cured* | | | |
| H, ShA | 50 | 73.9 | 77.6 |
| TS, MPa | 4.31 | 4.81 | 3.67 |
| EB (elongation at break), % | 375 | 352 | 327 |

The compounds after first stage mixing had a milky appearance. During the second mixing stage it was observed that the transparency improved. After second stage mixing all compounds were found to be translucent. After molding under the above mentioned conditions the obtained sheets were when placed on a print rendering a text below clearly readable. Therefore, high shear mixing such as in an open mills and a heat treatment seem to be beneficial for the transparency. The reason can be an improved dispersion and reduction of size and number of larger agglomerates. Also, filler wetting may improve and dispersed fine air bubbles may disappear. As the refractive index of air is well below of the refractive of all other matter even very small bubbles will render the compound milky.

The mixing has to be carried out in a way to optimize the filler dispersion. As especially mineral fillers tend to comprise agglomerates it is necessary to use high shear forces during mixing to shear down larger filler particles. An open mill is a suitable equipment for such a mixing. To speed up the addition of fillers into the polymer one can chose an internal mixer for the mix first and then continue the mixing in or on an open mill.

Lower mixing temperatures generally improve the filler dispersion due to the higher viscosity. The limitations of a low compound temperature during mixing are the cooling efficiency and the power and geometry of the mixing equipment.

In addition, in case of highly crystalline polymers the compound temperature needs to be at least in the range of the melting temperature. In case of polymer with low degree of crystallinity or in case of amorphous polymers, the mixing temperate only needs to be above the glass transition temperature of the polymer.

Thus, polymers especially suitable for the invention are those ones with low melting temperature, especially below 100°C or polymers which only have a lower amount of crystallinity, preferably below 50% of the reference value for polyethylene, more preferably below 30%.

It is common practice is rubber technology to allow a waiting time of 1 day after mixing to allow for the complete distribution especially of additives and the cure system by diffusion. However, for those skilled in the profession of rubber compound processing, this step can be shortened or even omitted if experiments indicate so. The inventive UV-curable compound can be prepared by any person skilled in the art of rubber compounding, especially cable manufacturing by using the usual equipment following the indicated requirements.

As the transparency was not influenced by the amount of added filler used in the trials (80 to 120 phr) one can conclude that even higher filler loadings will not negatively influence the transparency. In any case, intense mixing has an obvious improving effect on transparency.

After curing stress-strain data were obtained which clearly show a high state of cure and sufficiently high tensile strength and still long enough EB value for broad usages in cable jacket applications.

Considering the relative high degree of transparency one can assume that even thicker compound sheets will allow curing and thus not only thin cable coating is possible but also somewhat thicker extruded cables can be manufactured.

It is understood that a multi-stage UV cure is possible were the same cable is run several times through the same UV-source in case a deeper UV-light penetration is needed. The curing time depends on the state of cure desired, the thickness of the cured article and the radiation power of the UV-source. The choice of the light source will also depend on the type of UV-cure system used as is well known in the state of the art.

The oil swell resistance of compound sample 3 and 4 and 5 was tested in IRM 902 and IRM 903 oil. The obtained results indicate that oil resistances such as requested in SHF2 shipboard cable according to the international norm IEC 60092-359 and standard railway cable jackets can be achieved with these compounds.

For the assessment of flame retardency the LOI test method can be used. However, the LOI test method according to ASTM D 2863 A requires test specimen of 3 mm thickness. For the purpose of estimating the flame retardency with certain loading of MDH in ethylene-vinyl acetate rubber compounds 6 to 8 were prepared with a conventional peroxide cure system and 3 mm thick cured sheets evaluated for LOI. It is understood that in crosslinked rubber compounds the LOI value mainly depends on the chosen rubber, amount and type of filler and plasticizer additions but not so much on the method curing.

It was found that LOI values from 30 to 37% can be achieved with micron-MDH. The nano-MDH even at a filler level of only 80 phr achieved an LOI value above 30%. From that one can conclude that compounds 4 and 5 will have an even higher flame retardency due to the higher dosage of nano-MDH incorporated.

**Table 5 The Compositions of the Reference Compounds 6-8 and the Results thereof**

| Reference compound 6 | | Reference compound 7 | | Reference compound 8 | |
|---|---|---|---|---|---|
| Levapren 500 | 100 | Levapren 600 | 100 | Levapren 600 | 100 |
| Micron MDH | 140 | Micron MDH | 160 | Nano-MDH | 80 |
| Zinc-borate | 10 | Geniosil GF-31 | 1.6 | Zinc-borate | 10 |
| DOS | 5 | MgO | 3 | DOS | 5 |
| Silquest A-172 | 2 | Aflux 18 | 1.5 | TOTM | 5 |
| Aflux 18 | 1.5 | Stearic acid | 1 | Silquest A-172 | 1 |
| TMQ | 1 | | | MgO | 5 |
| Paraffine wax | 2 | | | ZnO | 5 |
| | | | | Rhenogran HT (Li-carbonate | 7 |
| | | | | A flux 18 | 1.5 |
| | | | | TMQ | 1.5 |
| TRIM/S | 1 | TRIM/S | 1 | TRIM/S | 1 |
| F40 | 6 | F40 | 6 | F40 | 6 |
| L.O.I | 30.5% | L.O.I | 37% | L.O.I | 30.5 |

**Table 6 The Compositions of the Reference Compounds 9-10 and the Results thereof**

| | Reference compound 9(TR11008-1) | Reference compound10 (TR11008-2) |
|---|---|---|
| Levapren 500 | 100 | |
| Levapren 600 | | 100 |
| Nano-MDH, pre-dried | 140 | 140 |
| DOS | 10 | 10 |
| Silquest A-172 | 2 | 2 |
| Naugard 445 | 1 | 1 |
| TRIM/S | 1 | 1 |
| Dicumyl-peroxide, 100% | 2.4 | 2.4 |
| Cpd ML1+4, 100°C | 92 | 95 |
| MDR 170°C, 1° arc, S'Max - S'Min, dNm | 53.9 | 57.8 |
| Cured at 170 °C | | |
| H, ShA, 3s | 87 | 86 |
| TS, MPa | 12.5 | 10.7 |
| EB, % | 365 | 370 |
| Cold bending, 2mm samples bent around 10mm mandrel within 0.5 s | Pass -25°C | Pass -25°C |
| LOI, % | 36.5 | 35.5 |

Reference compounds 9 and 10 were prepared to obtain transparent compounds curable with peroxides. By measuring the LOI based on 3mm sheets the flame retardency can be assessed. One can conclude that inventive compound 5 may achieve an LOI value of approximately 35% if the filler level is just raised to 140 phr.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A UV-curable flame retardant composition based on a polar ethylene-copolymer comprising a polar ethylene-copolymer, a photo initiator and a filler,
wherein the filler is selected from hydroxides, oxides, carbonates and/or silicates of aluminium, magnesium and calcium, and/or mixture thereof, and optional silica, and the filler is more than 50 parts by weight on the basis of 100 parts by weight the polar ethylene-copolymer.

2. The UV-curable flame retardant composition of claim 1, wherein the average particle size d₅₀ of the filler is micron-sized or less.

3. The UV-curable flame retardant composition of claim 2, wherein the particles size of the filler is 0.7 micron or less, preferably the particles size of the filler is 100 nm or less.

4. The UV-curable flame retardant composition of any of claims 1-3, wherein the filler is a mixture of both with micron-sized and nano-sized fillers.

5. The UV-curable flame retardant composition of any of claims 1-4, wherein the light transparency of the filler at wavelength of 300 nm and above is at least above 50% and the specific surface area is or more that 2.5 m²/g (BET).

6. The UV-curable flame retardant composition of any of claims 1-5, wherein the polar ethylene-copolymer is selected from ethylene-vinyl acetate copolymers, ethylene methyl acrylate copolymers, ethyl acrylate copolymers, butyl acrylate copolymers, or hydrogenated or partially hydrogenated nitrile butadiene rubber,

7. The UV-curable flame retardant composition of any of claims 1-6, wherein the composition further comprises optional a plasticizer, optional an anti-oxidant, optional processing aid and lubricant, optional a coupling agent, and optional a crosslinker coagent.

8. The UV-curable flame retardant composition of any of claims 1-7, wherein the filler is selected from the group consisting of aluminium hydroxide, aluminium trihydrate (ATH), magnesium hydroxide (MDH), aluminum oxide hydroxide (boehmite), mixed basic magnesium hydroxide carbonates, magnesium carbonate, calcium carbonate, mixed carbonates such as huntite, talcum, or a mixture of two or more, and optional silica, and wherein the particle size of the filler is around 1/4 of the wave length of UV-light, and/or the surface area of the filler is at least 5 m²/g.

9. The UV-curable flame retardant composition of any of claims 1-8, wherein the refractive index difference between the polar ethylene-copolymer and the filler is more than 0.07, preferably more than 0.09.

10. The UV-curable flame retardant composition of any of claims 1-9, wherein the amount of the polar ethylene-copolymer is of 100 parts by weight, the filler ranges from about 60 to about 200 parts by weight, the photo-initiator ranges from about 0.1 to about 5 parts by weight, the plasticizer ranges from 0 to about 20 parts by weight, the anti-oxidant ranges from 0 to about 2.0 parts by weight, the processing aid and lubricant range from 0 to about 5.0 parts by weight, the coupling agent ranges from 0 to about 5 parts by weight, and the crosslinker coagent ranges from 0 to 20 about parts by weight.

11. The UV-curable flame retardant composition of any of claims 1-10, wherein the amount of the polar ethylene-copolymer is of 100 parts by weight, the filler ranges from about 80 to about 160 parts by weight, the photo-initiator ranges from about 0.5 to about 3 parts by weight, the plasticizer ranges from 0 to about 15 parts by weight, the anti-oxidant ranges from f about 0.01 to about 1.0 parts by weight, the processing aid and lubricant range from 0 to about 2 parts by weight, the coupling agent ranges from 0-2 parts by weight, and the crosslinker coagent ranges from 0.5 to about 5 parts by weight.

12. The UV-curable flame retardant composition of any of claims 1-11, wherein the photo-initiator is selected from the group consisting of phenones such as benzophenone, hydroxyalkyl benzophenone and their derivatives, acetophenones, amino-acetophenones, diethoxyacetophenones, benzoin derivatives, benzil ketales, acyl-phosphine oxides such as bis(2,4,6-trimethylbenzoyl)-phenylphosphine oxide, bis(2,6-dimethoxybenzoyl)-(2,4,4-trimethylpentyl)phosphine oxide, 2,4,4-trimethylbenzoyl diphenylphosphine oxide, xanthone, thioxanthone, and a mixture of two or more.

13. The UV-curable flame retardant composition of any of claims 1-12, wherein the crosslinker coagent is selected from the group consisting of triallyl-cyanurate, triallyl-isocyanurate, multifunctional acrylates and methacrylates, and a mixture of two or more.

14. The UV-curable flame retardant composition of claim 13, wherein the multifunctional acrylates and methacrylates are selected from the group consisting of trimethylolpropane-trimetacrylates and tri-acrylates including those with ethoxy and propxy-groups, ethylene-glycol-diacrylates and dimetacrylates including those with ethoxy, propoxy-groups, polyesters, polyoles, polyurethanes, and alkoxylated polyols such as neopentylglycol, butylethylpropane diol, trimethylolpropane pentaerythritol, dipentaerythritol, polybutadiene-dioles, or glycerol.

15. The UV-curable flame retardant composition of any of claims 1-14, wherein the photo-initiator is selected from benzophenone, acetophenones, amino-acetophenones, diethoxyacetophenones, and a mixture of two or more.

16. The UV-curable flame retardant composition of any of claims 1-15, wherein the processing aid and lubricant are selected from the group consisting of stearic acid, stearamide, stearyl amine, waxes, and a mixture of two or more.

17. The UV-curable flame retardant composition of any of claims 1-16, wherein the filler is pre-treated by fatty acids, alkoxy-silanes, titanates, zirconates, or a mixture of two or more.

18. The UV-curable flame retardant composition of any of claims 1-17, wherein the amount of the filler is more than 70 parts by weight on the basis of 100 parts by weight the polar ethylene-copolymer, and at least 50% by weight of the filler comprises hydroxides or oxide-hydroxides of aluminium, magnesium, or a mixture thereof.

19. The UV-curable flame retardant composition of any of claims 1-18, wherein the UV-curable flame retardant composition further comprises an anti-stick agent selected from stearic acid, stearyl-amine or a mixture thereof.

20. The UV-curable flame retardant composition of any of claims 1-19, wherein the polar ethylene-copolymer is a polar ethylene-copolymer with low melting temperature, especially below 100°C or a polymer which only has a lower amount of crystallinity, preferably below 50% of the reference value for polyethylene, more preferably below 30%.

21. A method for preparing the UV-curable flame retardant composition of any of claims 1-20, comprising:
adding a polar ethylene-copolymer, and then gradually adding a filler, optional a plasticizer, optional an anti-oxidant, optional processing aid and lubricant, and optional a coupling agent,
mixing the ethylene-copolymer and the filler, optional a plasticizer, optional an anti-oxidant, optional processing aid and lubricant, and optional a coupling agent,
adding a photo-initiator, and optional a crosslinker coagent, to the resultant mixture,
wherein the filler is selected from hydroxides, oxides, carbonates and/or silicates of aluminium, magnesium and calcium, and/or mixture thereof, and optional silica, and the filler is more than 50 parts by weight on the basis of 100 parts by weight the polar ethylene-copolymer.

22. A UV-curing method for a UV-curable flame retardant composition of any of claims 1-20, comprising:
adding a polar ethylene-copolymer, and then gradually adding a filler, optional a plasticizer, optional an anti-oxidant, optional an processing aid and lubricant, optional a coupling agent, and optional a crosslinker coagent to the polar ethylene-copolymer,
mixing the ethylene-copolymer and the filler, optional a plasticizer, optional an anti-oxidant, optional processing aid and lubricant, and optional a coupling agent,
adding a photo-initiator, and optional a crosslinker coagent, to the resultant mixture, and
UV-curing by using light sources with wavelength between 200 and 700 nm after the resultant mixture has been shaped into any desired form article and where the UV-curing is carried out at least to an extent that the surface of the article is crosslinked,
wherein the filler is selected from hydroxides, oxides, carbonates and/or silicates of aluminium, magnesium and calcium, and/or mixture thereof, and optional silica, and the filler is more than 50 parts by weight on the basis of 100 parts by weight the polar ethylene-copolymer,

23. The UV-curing method of claim 22, wherein the mixing is carried out in an open mill which is optionally preceded by a first mixing step in an internal mixer and then followed by a compaction step by heating to a temperature above 100°C and where the compaction step is carried out by molding or any other shaping process under pressure or in a course of an extrusion process..

24. The UV-curing method of any of claims 22-23, wherein the UV-curing is immediately carried out after extruding at wavelength 200-700 nm with light intensity 400-2000 mW/cm².

25. The UV-curing method of any of claims 22-24, wherein the UV-curing is immediately carried out after extruding at wavelength 200-700 nm with light intensity 400-2000 mW/cm² and after the UV-curing, an electron beam curing is further carried out.

26. The UV-curing method of any of claims 22-25, wherein the amount of the filler is more than 70 parts by weight on the basis of 100 parts by weight the polar ethylene-copolymer, and at least 50% by weight of the filler comprises hydroxides or oxide-hydroxides of aluminium or magnesium, or a mixture thereof.

27. The UV-curing method of any of claim 22-26, wherein the UV-curable flame retardant composition further comprises an anti-stick agent selected from stearic acid, stearyl-amine or a mixture thereof.

28. An article produced by the UV-curable flame retardant composition of any of claims 1-20, or the UV-curable flame retardant composition produced by the UV-curing method of any of claim 22-27.

29. The article of claim 28 is selected from the group of cable jacket, rubberized fabrics and sheets, such as tarpaulins, roofing sheets, rubber linings, thin extruded profiles, rubber coatings and the like.

30. A use of the UV-curable flame retardant composition of any of claims 1-20, or the UV-curable flame retardant composition produced by the UV-curing method of any of claim 22-27 in the manufacture of a cable jacket material, rubberized fabrics and sheets, such as tarpaulins, roofing sheets, rubber linings, thin extruded profiles, rubber coatings and the like.

## Patentansprüche

1. UV-härtbare flammhemmende Zusammensetzung auf der Basis eines polaren Ethylen-Copolymers, umfassend ein polares Ethylencopolymer, einen Photoinitiator und einen Füllstoff,
wobei der Füllstoff ausgewählt ist aus Hydroxiden, Oxiden, Carbonaten und/oder Silikaten von Aluminium, Magnesium und Calcium, und/oder einer Mischung davon, und gegebenenfalls Siliciumdioxid, und der Füllstoff mehr als 50 Gewichtsteile, bezogen auf 100 Gewichtsteile des polaren Ethylen-Copolymers, ausmacht.

2. UV-härtbare flammhemmende Zusammensetzung nach Anspruch 1, wobei die mittlere Teilchengröße d₅₀ des Füllstoffs Mikrongröße oder weniger aufweist.

3. UV-härtbare flammhemmende Zusammensetzung nach Anspruch 2, wobei die Teilchengröße des Füllstoffs 0,7 Mikron oder weniger beträgt, wobei die Teilchengröße des Füllstoffs vorzugsweise 100 nm oder weniger beträgt.

4. UV-härtbare flammhemmende Zusammensetzung nach einem der Ansprüche 1 - 3, wobei der Füllstoff eine Mischung mit Füllstoffen sowohl in Mikrongröße als auch Nanogröße ist.

5. UV-härtbare flammhemmende Zusammensetzung nach einem der Ansprüche 1 - 4, wobei die Lichttransparenz des Füllstoffs bei einer Wellenlänge von 300 nm und darüber mindestens über 50 % beträgt, und die spezifische Oberfläche mehr als 2,5 m²/g (BET) beträgt.

6. UV-härtbare flammhemmende Zusammensetzung nach einem der Ansprüche 1 - 5, wobei das polare Ethylen-Copolymer ausgewählt ist aus EthylenVinylacetat-Copolymeren, Ethylen-Methylacrylat-Copolymeren, Ethylacrylat-Copolymeren, Butylacrylat-Copolymeren oder hydriertem oder teilweise hydriertem Nitrilbutadien-Kautschuk.

7. UV-härtbare flammhemmende Zusammensetzung nach einem der Ansprüche 1 - 6, wobei die Zusammensetzung ferner gegebenenfalls einen Weichmacher, gegebenenfalls ein Antioxidans, gegebenenfalls eine Verarbeitungshilfe und ein Schmiermittel, gegebenenfalls ein Kopplungsmittel und gegebenenfalls ein Vernetzer-Coagens umfasst.

8. UV-härtbare flammhemmende Zusammensetzung nach einem der Ansprüche 1 - 7, wobei der Füllstoff ausgewählt ist aus der Gruppe bestehend aus Aluminiumhydroxid, Aluminiumtrihydrat (ATH), Magnesiumhydroxid (MDH), Aluminiumoxidhydroxid (Böhmit), gemischten basischen Magnesiumhydroxidcarbonaten, Magnesiumcarbonat, Calciumcarbonat, gemischten Carbonaten, wie Huntit, Talk, oder einer Mischung von zwei oder mehreren, und gegebenenfalls Siliciumdioxid, und wobei die Teilchengröße des Füllstoffs ungefähr 1/4 der Wellenlänge von UV-Licht beträgt, und/oder die Oberfläche des Füllstoffs mindestens 5 m²/g beträgt.

9. UV-härtbare flammhemmende Zusammensetzung nach einem der Ansprüche 1 - 8, wobei die Brechungsindexdifferenz zwischen dem polaren Ethylen-Copolymer und dem Füllstoff mehr als 0,07, vorzugsweise mehr als 0,09 beträgt.

10. UV-härtbare flammhemmende Zusammensetzung nach einem der Ansprüche 1 - 9, wobei die Menge des polaren Ethylen-Copolymers 100 Gewichtsteile beträgt, der Füllstoff im Bereich von ungefähr 60 bis ungefähr 200 Gewichtsteilen liegt, der Photoinitiator im Bereich von ungefähr 0,1 bis ungefähr 5 Gewichtsteilen liegt, der Weichmacher im Bereich von 0 bis ungefähr 20 Gewichtsteilen liegt, das Antioxidans im Bereich von 0 bis ungefähr 2,0 Gewichtsteilen liegt, die Verarbeitungshilfe und das Schmiermittel im Bereich von 0 bis ungefähr 5,0 Gewichsteilen liegen, das Kopplungsmittel im Bereich von 0 bis ungefähr 5 Gewichtsteilen liegt, und das Vernetzer-Coagens im Bereich von 0 bis ungefähr 20 Gewichtsteilen liegt.

11. UV-härtbare flammhemmende Zusammensetzung nach einem der Ansprüche 1 - 10, wobei die Menge des polaren Ethylen-Copolymers 100 Gewichtsteile beträgt, der Füllstoff im Bereich von ungefähr 80 bis ungefähr 160 Gewichtsteilen liegt, der Photoinitiator im Bereich von ungefähr 0,5 bis ungefähr 3 Gewichtsteilen liegt, der Weichmacher im Bereich von 0 bis ungefähr 15 Gewichtsteilen liegt, das Antioxidans im Bereich von 0,01 bis ungefähr 1,0 Gewichtsteilen liegt, die Verarbeitungshilfe und das Schmiermittel im Bereich von 0 bis ungefähr 2 Gewichsteilen liegen, das Kopplungsmittel im Bereich von 0 bis 2 Gewichtsteilen liegt, und das Vernetzer-Coagens im Bereich von 0,5 bis ungefähr 5 Gewichtsteilen liegt.

12. UV-härtbare flammhemmende Zusammensetzung nach einem der Ansprüche 1 - 11, wobei der Photoinitiator ausgewählt ist aus der Gruppe bestehend aus Phenonen, wie Benzophenon, Hydroxyalkylbenzophenon und ihren Derviaten, Acetophenonen, Aminoacetophenonen, Diethoxyacetophenonen, Benzoin-Derivaten, Benzilketalen, Acylphosphinoxiden, wie Bis-(2,4,6-trimethylbenzoyl)-phenylphosphinoxid, Bis-(2,6-dimethöxybenzoyl)-(2,4,4-trimethylpentyl)-phosphinoxid, 2,4,4-Trimethylbenzoyldiphenylphosphinoxid, Xanthon, Thioxanthon, und einer Mischung von zwei oder mehreren.

13. UV-härtbare flammhemmende Zusammensetzung nach einem der Ansprüche 1 - 12, wobei das Vernetzer-Coagens ausgewählt ist aus der Gruppe bestehend aus Triallylcyanurat, Triallylisocyanurat, multifunktionellen Acrylaten und Methacrylaten, und einer Mischung von zwei oder mehreren.

14. UV-härtbare flammhemmende Zusammensetzung nach Anspruch 13, wobei die multifunktionellen Acrylate und Methacrylate ausgewählt sind aus der Gruppe bestehend aus Trimethylolpropantrimethacrylaten und -triacrylaten, einschließlich jener mit Ethoxy- und Propoxy-Gruppen, Ethylenglykoldiacrylaten und -dimethacrylaten, einschließlich jener mit Ethoxy-, Propoxy-Gruppen, Polyestern, Polyolen, Polyurethanen, und alkoxylierten Polyolen, wie Neopentylglykol, Butylethylpropandiol, Trimethylolpropanpentacrythrit, Dipentaerythrit, Polybutadiendiolen, oder Glycerin.

15. UV-härtbare flammhemmende Zusammensetzung nach einem der Ansprüche 1 - 14, wobei der Photoinitiator ausgewählt ist aus Benzophenon, Acetophenonen, Aminoacetophenonen, Diethoxyacetophenonen, und einer Mischung von zwei oder mehreren.

16. UV-härtbare flammhemmende Zusammensetzung nach einem der Ansprüche 1 - 15, wobei die Verarbeitungshilfe und das Schmiermittel ausgewählt sind aus der Gruppe bestehend aus Stearinsäure, Stearamid, Stearylamin, Wachsen, und einer Mischung von zwei oder mehreren.

17. UV-härtbare flammhemmende Zusammensetzung nach einem der Ansprüche 1 - 16, wobei der Füllstoff vorbehandelt ist mit Fettsäuren, Alkoxysilanen, Titanaten, Zirkonaten, oder einer Mischung von zwei oder mehreren.

18. UV-härtbare flammhemmende Zusammensetzung nach einem der Ansprüche 1 - 17, wobei die Menge des Füllstoffs mehr als 70 Gewichtsteile, bezogen auf 100 Gewichtsteile des polaren Ethylen-Copolymers, beträgt, und mindestens 50 Gew.-% des Füllstoffs Hydroxide oder Oxidhydroxide von Aluminium, Magnesium oder einer Mischung davon umfassen.

19. UV-härtbare flammhemmende Zusammensetzung nach einem der Ansprüche 1 - 18, wobei die UV-härtbare flammhemmende Zusammensetzung ferner ein Anti-Haftmittel umfasst, das aus Stearinsäure, Stearylamin oder einer Mischung davon ausgewählt ist.

20. UV-härtbare flammhemmende Zusammensetzung nach einem der Ansprüche 1 - 19, wobei das polare Ethylen-Copolymer ein polares Ethylen-Copolymer mit niedriger Schmelztemperatur, insbesondere unter 100 °C, oder ein Polymer ist, das nur einen geringen Kristallinitätsgrad aufweist, vorzugsweise unter 50 % des Referenzwerts für Polyethylen, bevorzugter unter 30 %.

21. Verfahren zur Herstellung der UV-härtbaren flammhemmenden Zusammensetzung nach einem der Ansprüche 1 - 20, umfassend:
Zusetzen eines polaren Ethylen-Copolymers und dann allmählich Zusetzen eines Füllstoffs, gegebenenfalls eines Weichmachers, gegebenenfalls eines Antioxidans, gegebenenfalls einer Verarbeitungshilfe und eines Schmiermittels, und gegebenenfalls eines Kopplungsmittels,
Mischen des Ethylen-Copolymers und des Füllstoffs, gegebenenfalls eines Weichmachers, gegebenenfalls eines Antioxidans, gegebenenfalls einer Verarbeitungshilfe und eines Schmiermittels, und gegebenenfalls eines Kopplungsmittels,
Zusetzen eines Photoinitiators, und gegebenenfalls eines Vernetzer-Coagens, zu der erhaltenen Mischung,
wobei der Füllstoff ausgewählt ist aus Hydroxiden, Oxiden, Carbonaten und/oder Silikaten von Aluminium, Magnesium und Calcium, und/oder einer Mischung davon, und gegebenenfalls Siliciumdioxid, und der Füllstoff mehr als 50 Gewichtsteile, bezogen auf 100 Gewichtsteile des polaren Ethylen-Copolymers, ausmacht.

22. UV-Härtungsverfahren für eine UV-härtbare flammhemmende Zusammensetzung nach einem der Ansprüche 1 - 20, umfassend:
Zusetzen eines polaren Ethylen-Copolymers und dann allmählich Zusetzen eines Füllstoffs, gegebenenfalls eines Weichmachers, gegebenenfalls eines Antioxidans, gegebenenfalls einer Verarbeitungshilfe und eines Schmiermittels, gegebenenfalls eines Kopplungsmittels, und gegebenenfalls eines Vernetzer-Coagens zu dem polaren Ethylen-Copolymer,
Mischen des Ethylen-Copolymers und des Füllstoffs, gegebenenfalls eines Weichmachers, gegebenenfalls eines Antioxidans, gegebenenfalls einer Verarbeitungshilfe und eines Schmiermittels, und gegebenenfalls eines Kopplungsmittels,
Zusetzen eines Photoinitiators, und gegebenenfalls eines Vernetzer-Coagens, zu der erhaltenen Mischung, und
UV-Härten unter Verwendung von Lichtquellen mit einer Wellenlänge zwischen 200 und 700 nm, nachdem die erhaltene Mischung zu einem beliebigen gewünschten Formartikel geformt wurde, und wobei das UV-Härten mindestens bis zu einem Grad durchgeführt wird, dass die Oberfläche des Artikels vernetzt wird,
wobei der Füllstoff ausgewählt ist aus Hydroxiden, Oxiden, Carbonaten und/oder Silikaten von Aluminium, Magnesium und Calcium, und/oder einer Mischung davon, und gegebenenfalls Siliciumdioxid, und der Füllstoff mehr als 50 Gewichtsteile, bezogen auf 100 Gewichtsteile des polaren Ethylen-Copolymers, ausmacht.

23. UV-Härtungsverfahren nach Anspruch 22, wobei das Mischen in einer offene Mühle durchgeführt wird, dem gegebenenfalls ein erster Mischschritt in einem Innenmischer vorausgeht und das dann von einem Kompaktierungsschritt durch Erhitzen auf eine Temperatur von mehr als 100 °C gefolgt wird, und wobei der Kompaktierungsschritt durch Formen oder einen beliebigen anderen Formgebungsprozess unter Druck oder im Verlauf eines Extrusionsprozesses durchgeführt wird.

24. UV-Härtungsverfahren nach einem der Ansprüche 22 - 23, wobei das UV-Härten unmittelbar nach Extrudieren bei einer Wellenlänge von 200 bis 700 nm mit einer Lichtintensität von 400 bis 2000 mW/cm² durchgeführt wird.

25. UV-Härtungsverfahren nach einem der Ansprüche 22 - 24, wobei das UV-Härten unmittelbar nach Extrudieren bei einer Wellenlänge von 200 bis 700 nm mit einer Lichtintensität von 400 bis 2000 mW/cm² durchgeführt wird, und nach dem UV-Härten ferner ein Elektronenstrahlhärten durchgeführt wird.

26. UV-Härtungsverfahren nach einem der Ansprüche 22 - 25, wobei die Menge des Füllstoffs mehr als 70 Gewichtsteile, bezogen auf 100 Gewichtsteile des polaren Ethylen-Copolymers, beträgt, und mindestens 50 Gew.-% des Füllstoffs Hydroxide oder Oxidhydroxide von Aluminium oder Magnesium oder eine Mischung davon umfassen.

27. UV-Härtungsverfahren nach einem der Ansprüche 22 - 26, wobei die UV-härtbare flammhemmende Zusammensetzung ferner ein Anti-Haftmittel umfasst, das aus Stearinsäure, Stearylamin oder einer Mischung davon ausgewählt ist.

28. Artikel, welcher aus der UV-härtbare flammhemmenden Zusammensetzung nach einem der Ansprüche 1 - 20 oder der UV-härtbaren flammhemmenden Zusammensetzung hergestellt ist, die durch das UV-Härtungsverfahren nach einem der Ansprüche 22 - 27 hergestellt wird.

29. Artikel nach Anspruch 28, welcher ausgewählt ist aus der Gruppe von einem Kabelmantel, gummierten Geweben und Schichten, wie Planen, Dachbahnen, Kautschukauskleidungen, dünnen extrudierten Profilen, Kautschukbeschichtungen und dergleichen.

30. Verwendung der UV-härtbaren flammhemmenden Zusammensetzung nach einem der Ansprüche 1 - 20, oder der UV-härtbaren flammhemmenden Zusammensetzung, die durch das UV-Härtungsverfahren nach einem der Ansprüche 22 - 27 hergestellt wird, bei der Herstellung von einem Kabelmantelmaterial, gummierten Geweben und Schichten, wie Planen, Dachbahnen, Kautschukauskleidungen, dünnen extrudierten Profilen, Kautschukbeschichtungen und dergleichen.

## Revendications

1. Composition ignifuge durcissable par UV à base de copolymère d'éthylène polaire comprenant un copolymère d'éthylène polaire, un photo-initiateur et une charge,
dans laquelle la charge est choisie parmi des hydroxydes, des oxydes, des carbonates et/ou des silicates d'aluminium, de magnésium et de calcium, et/ou un mélange de ceux-ci, et de la silice facultative, et la charge est supérieure à 50 parties en poids sur la base de 100 parties en poids du copolymère d'éthylène polaire.

2. Composition ignifuge durcissable par UV de la revendication 1, dans laquelle la taille de particule moyenne d₅₀ de la charge est de taille micrométrique ou inférieure.

3. Composition ignifuge durcissable par UV de à revendication 2, dans laquelle la taille de particule de la charge est de 0,7 micron ou moins, de préférence la taille de particule de la charge est de 100 nm ou moins.

4. Composition ignifuge durcissable par UV de l'une quelconque des revendications 1 à 3, dans laquelle la charge est un mélange à la fois avec des charges de taille micrométrique et de taille nanométrique.

5. Composition ignifuge durcissable par UV de l'une quelconque des revendications 1 à 4, dans laquelle la transparence optique de la charge à une longueur d'onde de 300 nm et au-dessus est au moins supérieure à 50 % et la surface spécifique est égale ou supérieure à 2,5 m²/g (BET).

6. Composition ignifuge durcissable par UV de l'une quelconque des revendications 1 à 5, dans laquelle le copolymère d'éthylène polaire est choisi parmi des copolymères d'éthylène-acétate de vinyle, des copolymères d'éthylène-acrylate de méthyle, des copolymères d'acrylate d'éthyle, des copolymères d'acrylate de butyle, ou un caoutchouc nitrile-butadiène hydrogéné ou partiellement hydrogéné.

7. Composition ignifuge durcissable par UV de l'une quelconque des revendications 1 à 6, la composition comprenant en outre un plastifiant facultatif, un antioxydant facultatif, un adjuvant de traitement et lubrifiant facultatif, un agent de couplage facultatif, et un co-agent de réticulation facultatif.

8. Composition ignifuge durcissable par UV de l'une quelconque des revendications 1 à 7, dans laquelle la charge est choisie dans le groupe constitué de l'hydroxyde d'aluminium, le trihydrate d'aluminium (ATH), l'hydroxyde de magnésium (MDH), l'hydroxyde d'oxyde d'aluminium (boehmite), des carbonates d'hydroxyde de magnésium basique mixtes, le carbonate de magnésium, le carbonate de calcium, des carbonates mixtes tels que la huntite, le talc, ou un mélange de deux ou plus de deux de ceux-ci, et de la silice facultative, et dans laquelle la taille de particule de la charge est environ 1/4 de la longueur d'onde de lumière UV, et/ou la surface de la charge est d'au moins 5 m²/g.

9. Composition ignifuge durcissable par UV de l'une quelconque des revendications 1 à 8, dans laquelle la différence d'indice de réfraction entre le copolymère d'éthylène polaire et la charge est supérieure à 0,07, de préférence supérieure à 0,09.

10. Composition ignifuge durcissable par UV de l'une quelconque des revendications 1 à 9, dans laquelle la quantité du copolymère d'éthylène polaire est de 100 parties en poids, la charge est dans la plage d'environ 60 à environ 200 parties en poids, le photo-initiateur est dans la plage d'environ 0,1 à environ 5 parties en poids, le plastifiant est dans la plage de 0 à environ 20 parties en poids, l'antioxydant est dans la plage de 0 à environ 2,0 parties en poids, l'adjuvant de traitement et le lubrifiant sont dans la plage de 0 à environ 5,0 parties en poids, l'agent de couplage est dans la plage de 0 à environ 5 parties en poids, et le co-agent de réticulation est dans la plage d'environ 0 à 20 parties en poids.

11. Composition ignifuge durcissable par UV de l'une quelconque des revendications 1 à 10, dans laquelle la quantité du copolymère d'éthylène polaire est de 100 parties en poids, la charge est dans la plage d'environ 80 à environ 160 parties en poids, le photo-initiateur est dans la plage d'environ 0,5 à environ 3 parties en poids, le plastifiant est dans la plage de 0 à environ 15 parties en poids, l'antioxydant est dans la plage d'environ 0,01 à environ 1,0 partie en poids, l'adjuvant de traitement et le lubrifiant sont dans la plage de 0 à environ 2 parties en poids, l'agent de couplage est dans la plage de 0 à 2 parties en poids, et le co-agent de réticulation est dans la plage de 0,5 à environ 5 parties en poids.

12. Composition ignifuge durcissable par UV de l'une quelconque des revendications 1 à 11, dans laquelle le photo-initiateur est choisi dans le groupe constitué de phénones telles que la benzophénone, une hydroxyalkylbenzophénone et leurs dérivés, des acétophénones, des amino-acétophénones, des diéthoxyacétophénones, des dérivés de benzoïne, des benzilcétals, des oxydes d'acyl-phosphine tels que l'oxyde de bis(2,4,6-triméthylbenzoyl)-phénylphosphine, l'oxyde de bis(2,6-diméthoxybenzoyl)-(2,4,4-triméthylpentyl)phosphine, l'oxyde de 2,4,4-triméthylbenzoyldiphénylphosphine, la xanthone, la thioxanthone, et un mélange de deux ou plus parmi ceux-ci.

13. Composition ignifuge durcissable par UV de l'une quelconque des revendications 1 à 12, dans laquelle le co-agent de réticulation est choisi dans le groupe constitué des cyanurate de triallyle, isocyanurate de triallyle, acrylates et méthacrylates multifonctionnels, et un mélange de deux ou plus de ceux-ci.

14. Composition ignifuge durcissable par UV de la revendication 13, dans laquelle les acrylates et méthacrylates multifonctionnels sont choisis dans le groupe constitué des triméthacrylates et triacrylates de triméthylolpropane comprenant ceux avec des groupes éthoxy et propoxy, diacrylates et diméthacrylates d'éthylène glycol et comprenant ceux avec des groupes éthoxy, propoxy, des polyesters, des polyols, des polyuréthanes, et des polyols alcoxylés tels que le néopentylglycol, le butyléthylpropanediol, le triméthylolpropanepentaérythritol, le dipentaérythritol, des polybutadiènediols ou le glycérol.

15. Composition ignifuge durcissable par UV de l'une quelconque des revendications 1 à 14, dans laquelle le photo-initiateur est choisi parmi la benzophénone, des acétophénones, des amino-acétophénones, des diéthoxyacétophénones, et un mélange de deux ou plus de celles-ci.

16. Composition ignifuge durcissable par UV de l'une quelconque des revendications 1 à 15, dans laquelle l'adjuvant de traitement et le lubrifiant sont choisis dans le groupe constitué de l'acide stéarique, le stéaramide, la stéarylamine, des cires, et un mélange de deux ou plus de ceux-ci.

17. Composition ignifuge durcissable par UV de l'une quelconque des revendications 1 à 16, dans laquelle la charge est prétraitée par des acides gras, des alcoxysilanes, des titanates, des zirconates, ou un mélange de deux ou plus de deux de ceux-ci.

18. Composition ignifuge durcissable par UV de l'une quelconque des revendications 1 à 17, dans laquelle la quantité de la charge est supérieure à 70 parties en poids sur la base de 100 parties en poids du copolymère d'éthylène polaire, et au moins 50 % en poids de la charge comprend des hydroxydes ou des oxydes-hydroxydes d'aluminium, de magnésium ou un mélange de ceux-ci.

19. Composition ignifuge durcissable par UV de l'une quelconque des revendications 1 à 18, la composition ignifuge durcissable par UV comprenant en outre un agent antiadhérent choisi parmi l'acide stéarique, la stéarylamine ou un mélange de ceux-ci.

20. Composition ignifuge durcissable par UV de l'une quelconque des revendications 1 à 19, dans laquelle le copolymère d'éthylène polaire est un copolymère d'éthylène polaire ayant une température de fusion basse, en particulier inférieure à 100 °C ou un polymère qui a seulement une quantité de cristallinité inférieure, de préférence inférieure à 50 % de la valeur de référence pour le polyéthylène, plus préférablement inférieure à 30 %.

21. Procédé de préparation de la composition ignifuge durcissable par UV de l'une quelconque des revendications 1 à 20, comprenant :
l'ajout d'un copolymère d'éthylène polaire, et ensuite l'ajout progressif d'une charge, un plastifiant facultatif, un antioxydant facultatif, un adjuvant de traitement et un lubrifiant facultatif, et un agent de couplage facultatif,
le mélange du copolymère d'éthylène et de la charge, d'un plastifiant facultatif, d'un antioxydant facultatif, d'un adjuvant de traitement et lubrifiant facultatif, et d'un agent de couplage facultatif,
l'ajout d'un photo-initiateur, et d'un co-agent de réticulation facultatif, au mélange résultant,
dans lequel la charge est choisie parmi des hydroxydes, des oxydes, des carbonates et/ou des silicates d'aluminium, de magnésium et de calcium, et/ou un mélange de ceux-ci, et facultativement la silice, et la charge représente plus de 50 parties en poids sur la base de 100 parties en poids du copolymère d'éthylène polaire.

22. Procédé de durcissement par UV pour composition ignifuge durcissable par UV de l'une quelconque des revendications 1 à 20, comprenant :
l'ajout d'un copolymère d'éthylène polaire, et ensuite l'ajout progressif d'une charge, d'un plastifiant facultatif, d'un antioxydant facultatif, d'un adjuvant de traitement et lubrifiant facultatif, d'un agent de couplage facultatif, et d'un co-agent de réticulation facultatif au copolymère d'éthylène polaire,
le mélange du copolymère d'éthylène et de la charge, d'un plastifiant facultatif, d'un antioxydant facultatif, d'un adjuvant de traitement et lubrifiant facultatif, et d'un agent de couplage facultatif,
l'ajout d'un photo-initiateur, et d'un co-agent de réticulation facultatif, au mélange résultant, et
le durcissement par UV au moyen de sources de lumière ayant une longueur d'onde comprise entre 200 et 700 nm après que le mélange résultant ait été formé en un article de forme souhaitée quelconque et où le durcissement par UV est conduit au moins à un degré auquel la surface de l'article est réticulée,
dans lequel la charge est choisie parmi des hydroxydes, des oxydes, des carbonates et/ou des silicates d'aluminium, de magnésium et de calcium, et/ou un mélange de ceux-ci, et de la silice facultative, et la charge est supérieure à 50 parties en poids sur la base de 100 parties en poids du copolymère d'éthylène polaire.

23. Procédé de durcissement par UV de la revendication 22, dans lequel le mélange est conduit dans un broyeur ouvert qui est facultativement précédé d'une première étape de mélange dans un mélangeur interne et ensuite suivie d'une étape de compactage par chauffage à une température supérieure à 100 °C et où l'étape de compactage est conduite par moulage ou un autre processus de formage quelconque sous pression ou au cours d'un processus d'extrusion.

24. Procédé de durcissement par UV de l'une quelconque des revendications 22 à 23, dans lequel le durcissement par UV est conduit immédiatement après l'extrusion à une longueur d'onde de 200 à 700 nm avec une intensité de lumière de 400 à 2000 mW/cm².

25. Procédé de durcissement par UV de l'une quelconque des revendications 22 à 24, dans lequel le durcissement par UV est conduit immédiatement après l'extrusion à une longueur d'onde de 200 à 700 nm avec une intensité lumineuse de 400 à 2000 mW/cm² et après le durcissement par UV, un durcissement par faisceau d'électrons est ensuite conduit.

26. Procédé de durcissement par UV de l'une quelconque des revendications 22 à 25, dans lequel la quantité de la charge est supérieure à 70 parties en poids sur la base de 100 parties en poids du copolymère d'éthylène polaire, et au moins 50 % en poids de la charge comprend des hydroxydes ou des oxydes-hydroxydes d'aluminium ou de magnésium, ou un mélange de ceux-ci.

27. Procédé de durcissement par UV de l'une quelconque des revendications 22 à 26, dans lequel la composition ignifuge durcissable par UV comprend en outre un agent antiadhérent choisi parmi l'acide stéarique, la stéarylamine ou un mélange de ceux-ci.

28. Article produit par la composition ignifuge durcissable par UV de l'une quelconque des revendications 1 à 20, ou la composition ignifuge durcissable par UV produite par le procédé de durcissement par UV de l'une quelconque des revendications 22 à 27.

29. Article de la revendication 28 qui est choisi dans le groupe d'une gaine de câble, de tissus et feuilles caoutchoutés, tels que des tarpaulins, de feuilles de couverture, de revêtements de caoutchouc, de profilés extrudés minces, de revêtements de caoutchouc et similaire.

30. Utilisation de la composition ignifuge durcissable par UV de l'une quelconque des revendications 1 à 20, ou la composition ignifuge durcissable par UV produite par le durcissement par un procédé UV de l'une quelconque des revendications 22 à 27 dans la fabrication d'un matériau de gaine de câble, de tissus et de feuilles caoutchoutés, tels que des tarpaulins, de feuilles de couverture, de revêtements de caoutchouc, de profilés extrudés minces, de revêtements de caoutchouc et similaire.
